(19) **Europäisches Patentamt**
**European Patent Office**
**Office européen des brevets**

(11) **EP 2 447 527 B1**

(12) **EUROPEAN PATENT SPECIFICATION**

(45) Date of publication and mention of the grant of the patent:
**09.08.2017 Bulletin 2017/32**

(51) Int Cl.:
*F03D 7/00* *(2006.01)*     *F03D 9/00* *(2016.01)*
*F03D 7/02* *(2006.01)*     *F03D 7/04* *(2006.01)*

(21) Application number: **10791439.2**

(22) Date of filing: **07.06.2010**

(86) International application number:
**PCT/CN2010/073598**

(87) International publication number:
**WO 2010/148933 (29.12.2010 Gazette 2010/52)**

(54) **INDIVIDUAL PITCH CONTROL METHOD FOR LARGE WIND GENERATING SET**

EINZELSPITZENSTEUERVERFAHREN FÜR EINE GROSSE WINDERZEUGUNGSANLAGE

PROCÉDÉ DE COMMANDE DE PAS INDIVIDUEL POUR ENSEMBLE DE GÉNÉRATION ÉOLIEN DE GRANDES DIMENSIONS

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **22.06.2009 CN 200910100064**

(43) Date of publication of application:
**02.05.2012 Bulletin 2012/18**

(73) Proprietor: **Zhejiang Windey Co., Ltd.**
**Zhejiang 311106 (CN)**

(72) Inventors:
• **YE, Hangye**
  **Zhejiang 310012 (CN)**
• **XU, Guodong**
  **Zhejiang 310012 (CN)**
• **YING, You**
  **Zhejiang 310012 (CN)**

(74) Representative: **Thoma, Michael et al**
**Lorenz Seidler Gossel**
**Rechtsanwälte Patentanwälte**
**Partnerschaft mbB**
**Widenmayerstraße 23**
**80538 München (DE)**

(56) References cited:
**EP-A1- 2 037 119      CA-A1- 2 671 408**
**CN-A- 1 860 292      CN-A- 101 404 476**
**CN-A- 101 592 127      JP-A- 6 117 353**
**JP-A- 2005 061 300      US-A1- 2008 247 873**

• **BOSSANYI E A: "INDIVIDUAL BLADE PITCH CONTROL FOR LOAD REDUCTION", WIND ENERGY, WILEY, CHICHESTER, GB, vol. 6, 8 October 2002 (2002-10-08), pages 119-128, XP008031928, ISSN: 1099-1824, DOI: 10.1002/WE.76**
• **J Mcnames: "Second Order Filters Overview", , 3 May 2015 (2015-05-03), XP055250632, Retrieved from the Internet: URL:http://www.kves.uniza.sk/kvesnew/dokum enty/DREP/Filters/SecondOrderFilters.pdf [retrieved on 2016-02-16]**
• **XING GANG ET AL.: 'Method for collective pitch control of wind turbine generator system' TRANSACTIONS OF THE CSAE vol. 24, no. 5, May 2008, pages 181 - 186, XP008164560**

## Description

This application claims the benefit of priority to Chinese Patent Application No. 200910100064.8, entitled "INDIVIDUAL PITCH CONTROL METHOD FOR LARGE WIND TURBINE GENERRATOR SYSTEMS", filed on June 22, 2009 with State Intellectual Property Office of PRC, which is incorporated herein by reference in its entirety.

## FIELD OF THE INVENTION

The present invention relates to a control method for a large wind turbine generator system, and particularly to an individual pitch control method for a large wind turbine generator system.

## BACKGROUND OF THE INVENTION

Wind shear, wind turbulence, tower shade effect, yaw deviation and other factors will cause unbalanced load on the rotor of the large wind turbine generator system. As the unit capacity of the wind turbine generator system increases, the diameter of the rotor increases, resulting in higher level of unbalance for the stress on the whole plane of the rotor and more significant unbalanced load on the rotor. The unbalanced load on the rotor will cause heavy fatigue load on important components such as pitch bearing, hub, main shaft, yaw bearing and tower.

Presently, a collective pitch control technique, in which blades are driven individually, i.e., three independent sets of pitch control executing mechanisms are given same location instructions, is used in almost all the large wind turbine generator systems with variable-speed pitch control of blades. However, such wind turbine generator systems can not eliminate the influence of the unbalanced load during the operation.

Theoretical analysis shows that the unbalanced load on the rotor may be reduced by individual pitch control of each blade according to conditions of the blade.

At present, a simple way to reduce the unbalanced load is measuring an azimuth of the rotor. Although wind speed variation of the rotor does not particularly depend on the azimuth of the rotor in practical wind regime; some specific influencing factors (wind shear, tower shade effect and inclination of the rotor) at a certain point on a blade vary independently with respect to the azimuth of the rotor under aerodynamic conditions. Theoretically, as long as these variations are constant, the pitch angle of each of the blades can be adjusted according to its functional relationship with the azimuth of the rotor, so as to reduce the load variation caused by the above factors. Although the effect of wind shear varies with the environment, a correction based on wind direction may be made. A correction based on yaw deviation may also be performed if a wind direction signal of an engine room is used.

However, random variation caused by the wind turbulence is predominant in practical wind field, so it is difficult for the above approach to achieve ideal effect. Especially for a large blade, optimal effect can hardly be achieved because the suitable pitch angle varies with the location of the blade.

If asymmetric loads can be measured continuously, the fatigue load on the blade, the hub, the main shaft, the yaw bearing and the tower can be reduced significantly by mitigating the asymmetry through individual pitch control. Nevertheless, individual pitch control is difficult to be implemented by classical control theory for its multiple variable inputs, multiple variable outputs, and system parameters with characteristics of nonlinearity, time variability and hysteresis, while complicated control strategy based on modem control theory for implementing the individual pitch control would greatly increase the calculation burden of the main controller and can hardly be put into practical application.

The article written by E.A. Bossanyi, titled "Individual Blade Pitch Control for Load Reduction", WIND ENERGY, WILEY, CHICHESTER, GB, vol. 6, 8 October 2002 (2002-10-08), pages 119-128, XP008031928, ISSN: 1099-1824, DOI: 10.1002/WE.76 describes an individual blade pitch control for load reduction.

## SUMMARY OF THE INVENTION

To overcome the drawbacks that the unbalanced load on the rotor can not be effectively reduced by the existing pitch control method for the wind turbine generator system and relatively heavy fatigue load is prone to occur, the present invention provides an individual pitch control method for a large wind turbine generator system, in which the relatively heavy fatigue load is avoided by measuring the unbalanced load.

The present invention provides an individual pitch control method for a large wind turbine generator system, which includes:

decomposing an individual pitch control into a collective pitch control process and a deviation pitch control process, where the collective pitch control process includes controlling a rotating speed of a rotor based on a classic PI control and obtaining a collective pitch angle desired to be output for the collective pitch control; and the deviation pitch control process includes: obtaining a nodding load component and a yaw load component by Park transforming measured load values at root part of three blades; obtaining pitch angles desired to be output on d-axis and q-axis by respectively PI controlling the tilting load component and the yaw load component; and obtaining deviation pitch angles desired to be output for the deviation pitch control by Park inverse transforming pitch angles desired to be output on d-axis and q-axis;

obtaining pitch angles desired to be output for the individual pitch control according to a sum of the collective pitch angle desired to be output for the collective pitch control and the respective deviation pitch angles desired to be output for the deviation pitch control; and

implementing the pitch control by controlling operations of respective pitch control servo motors according to the pitch angles desired to be output for the individual pitch control.

The step of controlling a rotating speed of a rotor based on a classic PI control and obtaining a collective pitch angle desired to be output for the collective pitch control further includes:

detecting a generator rotating speed $\omega_g$, obtaining a rotating speed deviation $\Delta\omega$ by subtracting a reference rotating speed $\omega_{ref}$ from the generator rotating speed $\omega_g$, and obtaining the collective pitch angle $\beta_c$ desired to be output for the collective pitch control according to the following Laplace formula: $\dfrac{\beta_c(s)}{\Delta\omega(s)} = \dfrac{K_c}{sT_c}(1 + sT_c)$, where $K_c$ is a proportion coefficient of a PI controller, and $T_c$ is an integration time constant of the PI controller.

The deviation pitch control process further includes:

1) transmitting measured load values ($M_{y1}$, $M_{y2}$, $M_{y3}$) at root part of the three blades and a azimuth $\psi$ of the rotor to a main controller, performing a Park transformation on the load values ($M_{y1}$, $M_{y2}$, $M_{y3}$) at root part of the three blades by the main controller, and obtaining the nodding load component $M_{tilt}$ and the yaw load component $M_{yaw}$;

2) obtaining pitch angles ($\beta_1^{cm}, \beta_2^{cm}$) desired to be output on d-axis and q-axis respectively according to the

following Laplace formulae: $\dfrac{\beta_1^{cm}(s)}{M_{tilt}(s)} = \dfrac{K_d}{sT_d}(1 + sT_d)$ , $\dfrac{\beta_2^{cm}(s)}{M_{yaw}(s)} = \dfrac{K_q}{sT_q}(1 + sT_a)$, where $K_d$ and $K_q$

are proportion coefficients of a PI controller, and $T_d$ and $T_q$ are integration time constants of the PI controller, wherein the d-axis and q-axis are axes of a fixed coordinate system of a hub; and
3) obtaining the deviation pitch angles ($\beta'_1, \beta'_2, \beta'_2$) desired to be output for the deviation pitch control by Park inverse transforming the pitch angles ($\beta_1^{cm}, \beta_2^{cm}$) desired to be output on d-axis and q-axis.

The step of obtaining pitch angles desired to be output for the individual pitch control according to the collective pitch angle desired to be output for the collective pitch control and the deviation pitch angles desired to be output for the deviation pitch control is implemented according to the following formulae: $\beta_1 = \beta'_1 + \beta_c, \beta_2 = \beta'_2 + \beta_c, \beta_3 = \beta'_3 + \beta_c$ ; where $\beta_c$ is the collective pitch angle desired to be output for the collective pitch control; ($\beta'_1, \beta'_2, \beta'_2$) are the deviation pitch angles desired to be output for the deviation pitch control; and $\beta_1, \beta_2, \beta_3$ are pitch angles desired to be output for the individual pitch control.
The method further comprises a step of filtering the generator rotating speed ($\omega_g$) according to the following Laplace formula:

$$\frac{\omega_{gf}(s)}{\omega_g(s)} = \frac{\omega_1^2}{s^2 + 2\eta_1\omega_1 + \omega_1^2} \cdot \frac{1 + 2\eta_2 s/\omega_2 + s^2/\omega_2^2}{1 + 2\eta_3 s/\omega_3 + s^2/\omega_3^2} ;$$

where $\omega_{gf}$ is a post-filtering generator rotating speed, $\omega_1$ is a natural frequency of a low-pass filter, $\eta_1$ is a damping ratio of the low-pass filter, $\omega_2$ and $\omega_3$ are natural frequencies of a notch filter, and $\eta_2$ and $\eta_3$ are damping ratios of the notch filter.
Preferably, before the step of performing a Park transformation on the load values ($M_{y1}$, $M_{y2}$, $M_{y3}$) at root part of the three blades by the main controller, the method further includes a step of low-pass filtering the load values at root part of the three blades according to the following Laplace formula: $\dfrac{M_{yif}(s)}{M_{yi}(s)} = \dfrac{\omega_4^2}{s^2 + 2\eta_4\omega_4 s + \omega_4^2}$ ;

where $i = 1,2,3$ , $M_{yi}$ and $M_{yif}$ are respectively pre-filtering load value and post-filtering load value at the root part of the $i$th blade, $\omega_4$ is a natural frequency of a low-pass filter, and $\eta_4$ is a natural frequency of a low-pass filter.

Preferably, before the step of obtaining pitch angles desired to be output on d-axis and q-axis respectively according to the Laplace formulae, the method further includes a step of notch filtering the nodding load component $M_{tilt}$ and the yaw load component $M_{yaw}$ according to the following Laplace formulae:

$$\frac{M_{tiltf}(s)}{M_{tilt}(s)} = \frac{1 + 2\eta_5 s / \omega_5 + s^2 / \omega_5^2}{1 + 2\eta_6 s / \omega_6 + s^2 / \omega_6^2}, \quad \frac{M_{yawf}(s)}{M_{yaw}(s)} = \frac{1 + 2\eta_5 s / \omega_5 + s^2 / \omega_5^2}{1 + 2\eta_6 s / \omega_6 + s^2 / \omega_6^2} ;$$

where $M_{tiltf}$ is a post-filtering tilting load component, $M_{yawf}$ is a post-filtering yaw load component, $\omega_5$ and $\omega_6$ are natural frequencies of a notch filter, and $\eta_5$ and $\eta_6$ are damping ratios of the notch filter.

Preferably, the Park transformation is 3/2 Park transformation.

Preferably, the load values ($M_{y1}$, $M_{y2}$, $M_{y3}$) at the root part of the three blades are detected by an optical fiber load sensor mounted at the root part of the blades.

Preferably, the azimuth $\psi$ of the rotor is detected by an incremental encoder mounted on a slip ring.

The present invention has the following advantages: 1. the unbalanced load on the rotor can be reduced effectively, and the fatigue load on the pitch bearing, the main shaft, the hub, the yaw bearing and the tower can be reduced, thus the reliability of the device is improved and the service life of the device is prolonged; and 2. the yaw load $M_{yaw}$, which reflects the error for facing wind direction, can be generated, so that the wind turbine generator system can be kept facing wind without using yaw drives in the wind turbine.

**BRIEF DESCRIPTION OF THE DRAWINGS**

Figure 1 shows an exemplary distribution of instantaneous wind speed, where X-axis represents the height, Y-axis represents the horizontal distance from the center of the hub, and Z-axis represents the wind speed;
Figure 2(a) shows a spectrogram of a blade load $M_y$;
Figure 2(b) shows a spectrogram of a hub nodding load $M_{tilt}$;
Figure 3(a) shows a rotating coordinate system for analyzing the blade load;
Figure 3(b) shows a fixed coordinate system of the hub for analyzing the load of the hub, the tower and other static components of the wind turbine;
Figure 4 is a schematic diagram showing the principle of the individual pitch control in the present invention; and
Figure 5 is diagram shows transfer functions of the deviation controller.

In the Figures, $\beta$ is an average value of actual pitch angles of three blades, $\beta_c$ is a collective pitch angle desired to be output for the collective pitch control, $\beta'_1$, $\beta'_2$ and $\beta'_3$ are deviation pitch angles desired to be output for the deviation pitch control, $\beta_1$, $\beta_2$ and $\beta_3$ are pitch angles desired to be output for the individual pitch control, $\beta_1^{cm}$ and $\beta_2^{cm}$ are pitch angles desired to be output on d-axis and q-axis, $M_{y1}$, $M_{y2}$ and $M_{y3}$ are load values at the root part of the three blades, $M_{tilt}$ and $M_{yaw}$ are load components on d-axis and q-axis, $\omega_g$ is a generator rotating speed, $\omega_{ref}$ is a rotor reference value, $\Delta\omega$ is a rotating speed deviation, $\psi$ is a azimuth of the rotor, $K_c$, $K_q$ and $K_d$ are gains of the PI controller, $T_c$, $T_q$ and $T_d$ are integration time constants of the PI controller, $\omega_1$ and $\omega_4$ are natural frequencies of the low-pass filter, $\eta_1$ and $\eta_4$ are damping ratios of the low-pass filter, $\omega_2$, $\omega_3$, $\omega_5$ and $\omega_6$ are natural frequencies of a notch filter, and $\eta_2$, $\eta_3$, $\eta_5$ and $\eta_6$ are damping ratios of the notch filter.

**DETAILED DESCRIPTION OF THE INVENTION**

The inventive concept and the basic principle of the present invention will be described hereinafter to facilitate the understanding and the implementing of the present invention by those skilled in the art.

The technical concept of the present invention is as follows: the adopted individual pitch control is composed of a collective pitch control and a deviation pitch control, i.e., the outputs of the individual pitch control (the pitch angles desired to be output for the three blades) are obtained by adding the output of the collective pitch control (the common portion of the pitch angles desired to be output for the three blades) to the outputs of the deviation pitch control (the deviation portion of the pitch angles desired to be output for the three blades). Furthermore, the collective pitch control and the deviation pitch control are decomposed: the collective pitch control is used to implement the conventional pitch control function, in which the rotating speed of the rotor is controlled based on classical PI control; and the deviation pitch control is used to reduce the unbalanced loads on the rotor.

The unbalanced loads $M_{tilt}$ and $M_{yaw}$ on the rotor are caused by the load fluctuation on the blades (which causes unbalanced stress on the three blades). If the 1P (nP represents n times of the rotating frequency of the rotor) harmonic component which is dominate in the blade load can be reduced by the deviation pitch control, the unbalanced loads on the rotor can be reduced effectively. The blade load $M_y$ is correlated to the pitch angle $\beta$ and the relative wind speed $v$. In the case of a constant relative wind speed $v$, the blade load $M_y$ and the pitch angle $\beta$ can be linearized to be linearly proportional nearby the working point, therefore regulating the pitch angle $\beta$ in the same frequency (1P) is needed to reduce the 1P harmonic component in the blade load.

Hence, the technical concept of the deviation pitch control is as follows: only the 1P harmonic component which is dominant in the load on the blade is reduced. The loads ($M_{y1}$, $My_2$, $M_{y3}$) on the three blades are transformed onto the d-q-axis in the fixed coordinate system of the hub by Park transformation which is commonly-used in electromechanics, so as to obtain the d-axis load component and the q-axis load component, which respectively represent the unbalanced loads $M_{tilt}$ and $M_{yaw}$ on the rotor. The d-axis load component and the q-axis load component are respectively subjected to classical PI control (the object value of the control is 0), so as to obtain the pitch angles $\left( \beta_1^{cm}, \beta_2^{cm} \right)$ desired to be output on d-axis and q-axis, which are Park inverse transformed into the deviation pitch angles ($\beta_1, \beta_2, \beta_3$) of 1P frequency variation in turn, thereby reducing the 1P harmonic component dominant in the blade load. Low-pass filter for lowering the sensitivity of the controller at relatively high frequency disturbance and notch filter for filtering 3P harmonic component are introduced into the deviation control, because once being amplified by the controller, the 3P harmonic component of the load in the fixed coordinate system of the hub may induce relatively heavy fatigue load on the wheel hub, the yaw bearing and the tower.

For better understanding of the above objects, features and advantages of the present invention, the embodiments of the present invention will be described in detail in conjunction with the drawings hereinafter.

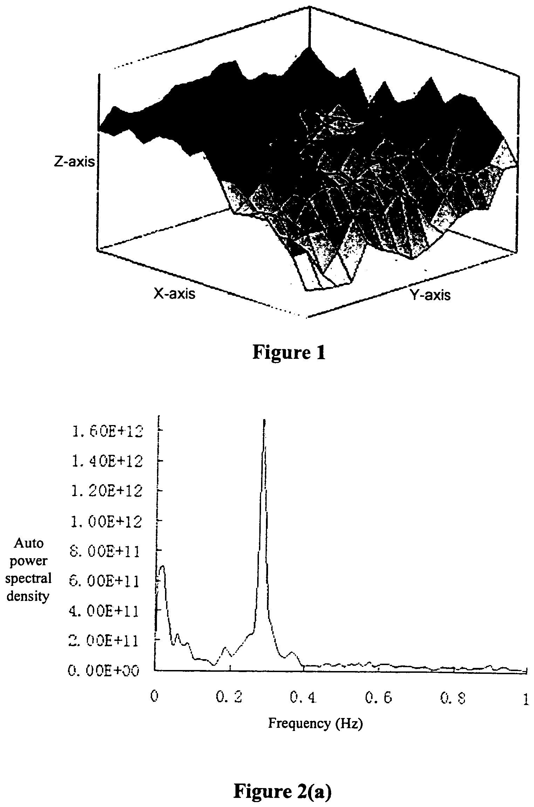

Referring to Figures 1-5, an embodiment of the present invention provides an individual pitch control method for a large wind turbine generator system. The individual pitch control method includes a collective pitch control process, and the collective pitch control process includes: detecting a generator rotating speed $\omega_g$, obtaining a rotating speed deviation $\Delta\omega$ by subtracting a reference rotating speed $\omega_{ref}$ from the generator rotating speed $\omega_g$, and obtaining the collective pitch angle $\beta_c$ desired to be output for the collective pitch control according to the following Laplace formula:

$$\frac{\beta_c(s)}{\Delta\omega(s)} = \frac{K_c}{sT_c}(1 + sT_c) ,$$ where $K_c$ is a proportion coefficient of a PI controller, and $T_c$ is an integration time constant of the PI controller.

The individual pitch control method further includes a deviation pitch control process, and the deviation pitch control process includes:

1) transmitting measured load values ($M_{y1}$, $M_{y2}$, $M_{y3}$) at root part of the three blades and a azimuth $\psi$ of the rotor to a main controller, performing a Park transformation on the load values ($M_{y1}$, $M_{y2}$, $M_{y3}$) at root part of the three blades by the main controller, and obtaining the nodding load component $M_{tilt}$ and the yaw load component $M_{yaw}$;

2) obtaining pitch angles $\left( \beta_1^{cm}, \beta_2^{cm} \right)$ desired to be output on d-axis and q-axis respectively according to the following Laplace formulae: $$\frac{\beta_1^{cm}(s)}{M_{titl}(s)} = \frac{K_d}{sT_d}(1 + sT_d) , \quad \frac{\beta_2^{cm}(s)}{M_{yaw}(s)} = \frac{K_q}{sT_q}(1 + sT_a) ,$$ where $K_d$ and $K_q$ are proportion coefficients of a PI controller, and $T_d$ and $T_q$ are integration time constants of the PI controller; and

3) obtaining the deviation pitch angles ($\beta_1, \beta_2, \beta_2$) desired to be output for the deviation pitch control by Park inverse transforming the pitch angles $\left( \beta_1^{cm}, \beta_2^{cm} \right)$ desired to be output on d-axis and q-axis;

obtaining the pitch angles ($\beta_1$, $\beta_2$, $\beta_3$) desired to be output for the individual pitch control according to the collective pitch angle $\beta_c$ desired to be output for the collective pitch control and the deviation pitch angles ($\beta'_1$, $\beta'_2$, $\beta'_2$) desired to be output for the deviation pitch control: $\beta_1 = \beta'_1 + \beta_c$, $\beta_2 = \beta'_2 + \beta_c$, $\beta_3 = \beta'_3 + \beta_c$;

implementing the pitch control by controlling operations of respective pitch control servo motors according to the pitch angles ($\beta_1$, $\beta_2$, $\beta_3$) desired to be output for the individual pitch control.

The wind speed on the area swept by the rotor is variable in space and in time. Figure 1 shows an exemplary distribution of the instantaneous wind speed. Because wind speed increases with increasing height due to wind shear, when the rotor is rotating, the wind speed experienced on vertically upward blade is larger than that on vertically downward blade, and the difference of wind speed will cause a wind shear force on the rotating blade. Furthermore, at a certain height, the wind speed can be divided into two components, with the first component being the average wind speed at this height, and the other component being the random wind speed caused by turbulence. The uneven distribution of the wind speed will cause unbalanced loads on the rotor.

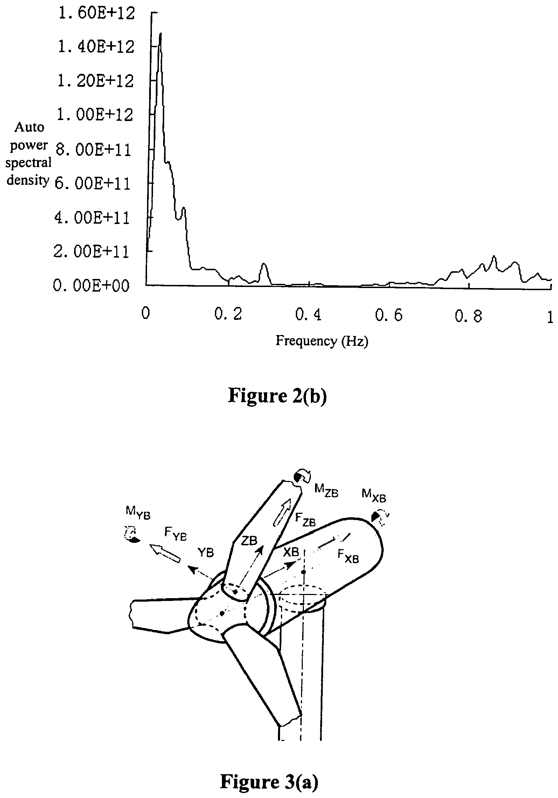

Referring to Figure 2(a) and Figure 2(b), the spectrograms of the load $M_y$ on the blade and the nodding load $M_{tilt}$ on the hub of the wind turbine generator system under a certain operating condition are shown. Under this operating condition, the rotating speed of the rotor is 17.2rpm, i.e., 1P=0.287Hz. From Figure 2(a), it can be seen that except for the dominant harmonic component with the frequency of 1P, there are 2P, 3P, 4P and other harmonic components in the load on the blade. Under ideal wind regime, for a three-blade wind turbine, the load on the hub is mainly composed of 3P, 6P, ..., nP harmonic components, and other harmonic components are counteracted with each other. However, under practical wind regime, other harmonic components of the load on the hub are not are counteracted, so that unbalanced load will be induced (as shown in Figure 2(b)). The unbalanced load will cause heavy fatigue load on the hub, the main shaft and the yaw bearing, which is harmful to the service life of the wind turbine.

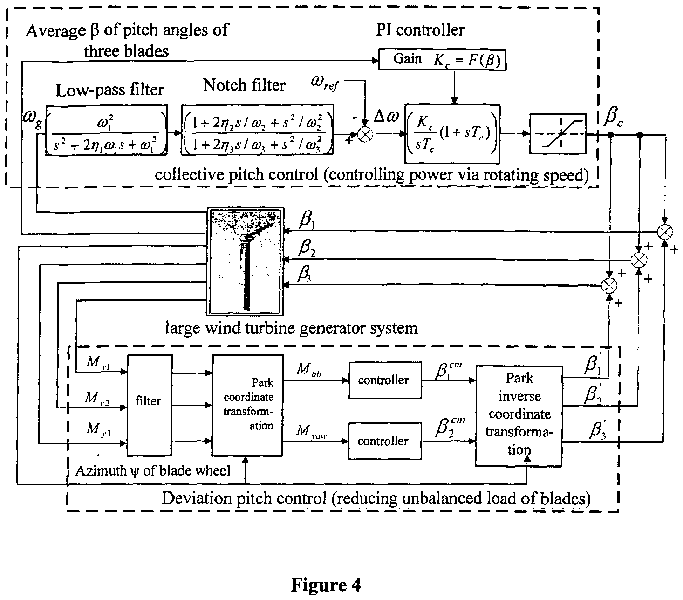

Referring to Figure 4, the individual pitch control is decomposed into the collective pitch control and the deviation pitch control. In the collective pitch control, the classical PI controller is used to control the rotating speed of the rotor (the function of the conventional pitch control); and the deviation pitch control is used to reduce the unbalanced load on the rotor. The pitch angles desired to be output for the individual pitch control is the sum of the collective pitch angle desired to be output for the collective pitch control and the respective deviation pitch angles desired to be output for the deviation pitch control.

The collective pitch control process includes: detecting a generator rotating speed $\omega_g$ with an encoder mounted on the generator, low-pass filtering and notch filtering the generator rotating speed $\omega_g$, obtaining a rotating speed deviation $\Delta\omega$ by subtracting a reference rotating speed $\omega_{ref}$ from the generator rotating speed $\omega_g$, and obtaining the collective pitch angle $\beta_c$ desired to be output for the collective pitch control after PI control. The low-pass filtering is used to lower the sensitivity of the controller at relatively high frequency, and the notch filtering is used to prevent unnecessary pitch control operation at the frequency close to 6P. Because of the nonlinearity of the pitch control system, the gain $K_c$ of the PI controller is determined from a look-up table, which is organized as a function of the average value $\beta$ of the actual pitch angles of the three blades.

The deviation pitch control will be described in detail hereinafter. Firstly, the load on blade of the wind turbine is analyzed. Figure 3(a) shows a rotating coordinate system which is generally used to analyze the blade load. In the rotating coordinate system, the bending moment $M_{yi}$ at the root part of the *ith* blade is:

$$M_{yi} = \frac{1}{2}\rho R^3 \pi C_{My}(\lambda_i, \beta_i)v_{wi}^2 \quad (1)$$

where $\rho$ is air density; $R$ is the radius of the rotor; $C_{my}(\lambda_i, \beta_i)$ is the bending moment coefficient of the blade; $\lambda_i$ is the tip speed ratio of the *ith* blade; $\beta_i$ is the pitch angle of the *ith* blade; and $v_{wi}$ is the effective wind speed of the *ith* blade. The gravity load and the inertia load of the blade are relatively small and are negligible. It is assumed that the three blades of the wind turbine are arranged uniformly, with an angle of 120° between adjacent blades.

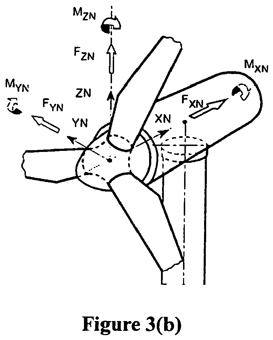

For calculating the load on the hub, the main shaft, the yaw bearing and the tower of the wind turbine, the blade load in the rotating coordinate system must be transformed into the fixed coordinate system of the hub (as shown in Figure 3(b)). With the coordinate transformation, the blade load is transformed into a load component on the y-axis and a load component on the x-axis in the fixed coordinate system of the hub, which respectively represent the physical meanings of the nodding moment load $M_{tilt}$ and the yaw moment load $M_{yaw}$, and the calculation formulae are as follows:

$$M_{tilt} = \sum_i^3 M_{yi} \cos[\omega t - (i-1)\frac{2\pi}{3}] \quad (2)$$

$$M_{yaw} = \sum_i^3 M_{yi} \sin[\omega t - (i-1)\frac{2\pi}{3}] \quad (3)$$

where $\omega$ is the rotating speed of the wind turbine, i.e. 1P.

It can be seen from the formulae (2) and (3) that, the transformation of the blade load in the rotating coordinate system into the load in the fixed coordinate system of the hub can be implemented by the Park transformation which is commonly used in the motor vector control.

The 3/2 Park transformation formula used herein is:

$$\begin{bmatrix} M_d \\ M_q \end{bmatrix} = \frac{2}{3} \begin{bmatrix} \cos(\psi) & \cos(\psi + \frac{2\pi}{3}) & \cos(\psi + \frac{4\pi}{3}) \\ \sin(\psi) & \sin(\psi + \frac{2\pi}{3}) & \sin(\psi + \frac{4\pi}{3}) \end{bmatrix} \begin{bmatrix} M_1 \\ M_2 \\ M_3 \end{bmatrix} \quad (4)$$

And the 3/2 Park inverse transformation formula used herein is:

$$\begin{bmatrix} M_1 \\ M_2 \\ M_3 \end{bmatrix} = \begin{bmatrix} \cos(\psi) & \sin(\psi) \\ \cos\left(\psi + \frac{2\pi}{3}\right) & \sin\left(\psi + \frac{2\pi}{3}\right) \\ \cos\left(\psi + \frac{4\pi}{3}\right) & \sin\left(\psi + \frac{4\pi}{3}\right) \end{bmatrix} \begin{bmatrix} M_d \\ M_q \end{bmatrix} \quad (5)$$

where $\psi$ is the azimuth of the rotor, $\psi = \omega t$; and M is the standard load.

The 1P harmonic component in the blade load is Park transformed (with the formula (4)) into the 0P harmonic component of the nodding moment load and the 0P harmonic component of the yaw moment load in the fixed coordinate system of the hub, which are subjected to PI control in turn to obtain outputs $(\beta_1^{cm}, \beta_2^{cm})$, and then subjected to Park inverse transformation (with the formula (5)) to obtain the pitch angles of the same frequency (1p) variation desired to be output, thereby reducing the 1P harmonic component in the blade load. The object of the PI controller is that the tilting moment load $M_{tilt}$ component and the yaw moment load $M_{yaw}$ in the fixed coordinate system of the hub, which are obtained by Park transformation of the 1P harmonic component in the blade load, are both 0, which means the reference input of the controller is 0. Because the deviation pitch control functions under the operating conditions when the wind speed is higher or lower than the rated wind speed, and the pitch control system is a nonlinear system, the gain of the PI controller and the amplitude-limiting magnitude in the amplitude limiting process both need to be determined using look-up table.

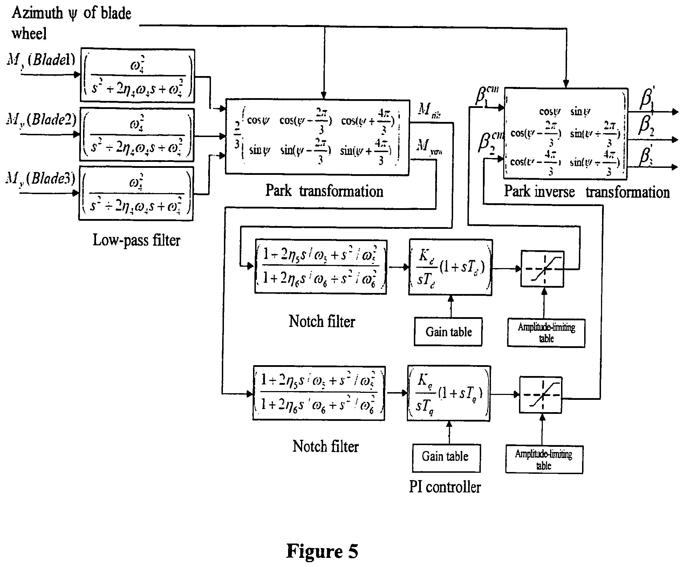

The specific implementation is shown in Figure 5. The load values $(M_{y1}, M_{y2}, M_{y3})$ at the root part of the three blades, which are detected by the optical fiber load sensor mounted at the root part, together with the azimuth $\psi$ of the rotor, which is detected by the incremental encoder mounted on the slip ring, are transmitted to the main controller; in the main controller, the load values $(M_{y1}, M_{y2}, M_{y3})$ at the root part of the three blades are low-pass filtered and are then transformed into the $M_{tilt}$ load component and the $M_{yaw}$ load component by the Park transformation (the formula (5)); then the $M_{tilt}$ load component and the $M_{yaw}$ load component are notch filtered respectively to filter the 3P harmonic component, and are subjected to PI controlling of the PI controller, resulting in the outputs $(\beta_1^{cm}, \beta_2^{cm})$; and then the deviation pitch angles $(\beta'_1, \beta'_2, \beta'_2)$ desired to be output are obtained by the Park inverse transformation (the formula (6)).

At last, the pitch angles $(\beta_1 = \beta'_1 + \beta_c, \beta_2 = \beta'_2 + \beta_c, \beta_3 = \beta'_3 + \beta_c)$ of the three blades desired to be output for the individual pitch control are obtained, and are sequentially transformed into control voltages within a range of -10V ~ +10V, into current signals within a certain range by the control of the servo controller, and then drive the servo motor to implement the pitch control.

One of the advantages of this technical solution is that the frequency required for the action of the newly added pitch control system is 1P, which is generally below 0.5Hz for the existing large wind turbine. Therefore, this technical solution is feasible for the pitch control executing mechanism adopted in the existing large wind turbine generator systems. Another advantage is that no modification to the physical structure of the wind turbine is needed for implementing the individual pitch control, since individually-driven collective pitch control is used in most of the existing large wind turbine generator systems.

The above are merely the preferred embodiments of the present invention, and are not meant to limit the present invention in any form. Although the present invention is disclosed in preferred embodiments as mentioned above, the preferred embodiments are not meant to restrict the present invention. Numerous modifications, variations and equivalent alternatives can be made by those skilled in the art based on the above disclosed method and technical contents without departing from the scope of the technical solutions. Therefore, any content that dose not deviate form the technical solutions of the present invention, and any simple variations, equivalents and modifications made to the above embodiments based on the essence of the present invention fall in the scope of protection of the present invention.

## Claims

1. An individual pitch control method for a large wind turbine generator system, comprising decomposing an individual pitch control into a collective pitch control process and a deviation pitch control process, wherein the collective pitch control process comprises controlling a rotating speed of a rotor based on a classic PI control by detecting a generator rotating speed ($\omega_g$), obtaining a rotating speed deviation ($\Delta\omega$) by subtracting a reference rotating speed ($\omega_{ref}$) from the generator rotating speed ($\omega_g$), and obtaining the collective pitch angle ($\beta_c$) desired to be output for the collective pitch control according to the following Laplace formula: $\dfrac{\beta_c(s)}{\Delta\omega(s)} = \dfrac{K_c}{sT_c}(1+sT_c)$ , where $K_c$ is a proportion coefficient of a PI controller, and $T_c$ is an integration time constant of the PI controller,
   wherein the individual pitch control method further comprises a deviation pitch control process, the deviation pitch control process comprising:

   1) transmitting measured load values ($M_{y1},M_{y2},M_{y3}$) at root part of the three blades and a azimuth $\psi$ of the rotor to a main controller, performing a Park transformation on the load values ($M_{y1}, M_{y2},M_{y3}$) at root part of the three blades by the main controller, and obtaining the nodding load component $M_{tilt}$ and the yaw load component ($M_{yaw}$);

   2) obtaining pitch angles $(\beta_1^{cm}, \beta_2^{cm})$ desired to be output on d-axis and q-axis respectively according to the

   following Laplace formulae: $\dfrac{\beta_1^{cm}(s)}{M_{titl}(s)} = \dfrac{K_d}{sT_d}(1+sT_d)$ , $\dfrac{\beta_2^{cm}(s)}{M_{yaw}(s)} = \dfrac{K_q}{sT_q}(1+sT_a)$, where $K_d$ and

   $K_q$ are proportion coefficients of a PI controller, and $T_d$ and $T_q$ are integration time constants of the PI controller, wherein the d-axis and q-axis are axes of a fixed coordinate system of a hub;

   3) obtaining the deviation pitch angles $(\beta_1', \beta_2', \beta_2')$ desired to be output for the deviation pitch control by Park inverse transforming the pitch angles $(\beta_1^{cm}, \beta_2^{cm})$ desired to be output on d-axis and q-axis;

   4) obtaining pitch angles ($\beta_1, \beta_2, \beta_3$) desired to be output for the individual pitch control according to the collective pitch angle ($\beta_c$) desired to be output for the collective pitch control and the deviation pitch angles ($\beta_1', \beta_2', \beta_2'$) desired to be output for the deviation pitch control: $\beta_1 = \beta_1' + \beta_c$, $\beta_2 = \beta_2' + \beta_c$, $\beta_3 = \beta_3' + \beta_c$ ; and

   5) implementing the pitch control by controlling operations of respective pitch control servo motors according to the pitch angles ($\beta_1, \beta_2, \beta_3$) desired to be output,

   **characterized in that** before the step of obtaining a rotating speed deviation $\Delta\omega$ by subtracting a reference rotating speed $\omega_{ref}$ from the generator rotating speed $\omega_g$, the method further comprises a step of filtering the generator rotating speed ($\omega_g$) according to the following Laplace formula:

   $$\frac{\omega_{gf}(s)}{\omega_g(s)} = \frac{\omega_1^2}{s^2 + 2\eta_1\omega_1 + \omega_1^2} \cdot \frac{1 + 2\eta_2 s/\omega_2 + s^2/\omega_2^2}{1 + 2\eta_3 s/\omega_3 + s^2/\omega_3^2} ;$$

where $\omega_{gf}$ is a post-filtering generator rotating speed, $\omega_1$ is a natural frequency of a low-pass filter, $\eta_1$ is a damping ratio of the low-pass filter, $\omega_2$ and $\omega_3$ are natural frequencies of a notch filter, and $\eta_2$ and $\eta_3$ are damping ratios of the notch filter.

2. The individual pitch control method for the large wind turbine generator system according to claim 1, wherein before performing a Park transformation on the load values ($M_{y1}$, $M_{y2}$, $M_{y3}$) at root part of the three blades, the method further comprises a step of performing low-pass filtering according to the following Laplace formula:

$$\frac{M_{yif}(s)}{M_{vi}(s)} = \frac{\omega_4^2}{s^2 + 2\eta_4\omega_4 s + \omega_4^2} \; ; \quad \text{where } i = 1,2,3 \text{ , } M_{yi} \text{ and } M_{yif} \text{ are respectively pre-filtering load value and}$$

post-filtering load value at the root part of the $i$th blade, $\omega_4$ is a natural frequency of a low-pass filter, and $\eta_4$ is a damping ratio of a low-pass filter.

3. The individual pitch control method for the large wind turbine generator system according to claim 1 or 2, wherein the method further comprises a step of notch filtering the nodding load component ($M_{tilt}$) and the yaw load component ($M_{yaw}$) according to the following Laplace formulae:

$$\frac{M_{tiltf}(s)}{M_{tilt}(s)} = \frac{1 + 2\eta_5 s / \omega_5 + s^2 / \omega_5^2}{1 + 2\eta_6 s / \omega_6 + s^2 / \omega_6^2} \text{ , and } \frac{M_{yawf}(s)}{M_{yaw}(s)} = \frac{1 + 2\eta_5 s / \omega_5 + s^2 / \omega_5^2}{1 + 2\eta_6 s / \omega_6 + s^2 / \omega_6^2} \; ;$$

where $M_{tiltf}$ is a post-filtering tilting load component, $M_{yawf}$ is a post-filtering yaw load component, $\omega_5$ and $\omega_6$ are natural frequencies of a notch filter, and $\eta_5$ and $\eta_6$ are damping ratios of the notch filter.

4. The individual pitch control method for the large wind turbine generator system according to claim 1 or 2, wherein the Park transformation is a 3/2 Park transformation.

**Patentansprüche**

1. Verfahren für individuelle Pitch-Regelung für eine große Windenergieanlage, welches das Zerlegen einer individuellen Pitch-Regelung in einen kollektiven Pitch-Regelungsprozess und einen Abweichungs-Pitch-Regelungsprozess umfasst, wobei der kollektive Pitch-Regelungsprozess umfasst: Regeln einer Drehzahl eines Rotors beruhend auf einer klassischen PI-Regelung durch Detektieren einer Generatordrehzahl ($\omega_g$), Erhalten einer Drehzahlabweichung ($\Delta\omega$) durch Subtrahieren einer Referenzdrehzahl ($\omega_{ref}$) von der Generatordrehzahl ($\omega_g$) und Erhalten des kollektiven Pitch-Winkels ($\beta_c$), der für die kollektive Pitch-Regelung auszugeben ist, gemäß der folgenden Laplace-Formel:

$$\frac{\beta_{c(s)}}{\Delta_{\omega(s)}} = \frac{K_c}{sT_c} \, (1 + sT_c), \text{ wobei } K_c \text{ ein Proportionalkoeffizient eines PI-Reglers ist und } T_c \text{ eine Integrationszeit-}$$

konstante des PI-Reglers ist,
wobei das individuelle Pitch-Regelungsverfahren weiterhin einen Abweichungs-Pitch-Regelungsprozess umfasst,
wobei der Abweichungs-Pitch-Regelungsprozess umfasst:

1) Senden von gemessenen Lastwerten ($M_{y1}$, $M_{y2}$, $M_{y3}$) am Fußteil der drei Schaufeln und eines Azimut $\Psi$ des Rotors zu einem Hauptregler, Durchführen einer Park-Transformation an den Lastwerten ($M_{y1}$, $M_{y2}$, $M_{y3}$) am Fußteil der drei Schaufeln durch den Hauptregler und Erhalten der Nicklastkomponente $M_{tilt}$ und der Gierlastkomponente ($M_{yaw}$);
2) Erhalten von Pitch-Winkeln ($\beta_1{}^{cm}$, $\beta_1{}^{cm}$), die an der d-Achse bzw. der q-Achse ausgegeben werden sollen, gemäß den folgenden Laplace-Formeln:

$$\frac{\beta_1{}^{cm}{}_{(s)}}{M_{tilt}(s)} = \frac{K_d}{sT_d} \, (1 + sT_d), \frac{\beta_2{}^{cm}{}_{(s)}}{M_{yaw}(s)} = \frac{K_q}{sT_q} \, (1 + sT_q),$$

wobei $K_d$ und $K_q$ Proportionalkoeffizienten eines PI-Reglers sind und $T_d$ und $T_q$ Integrationszeitkonstanten des PI-Reglers sind, wobei die d-Achse und die q-Achse Achsen eines festen Koordinatensystems einer Nabe sind;

3) Erhalten der Abweichungs-Pitch-Winkel ($\dot{\beta}_1$, $\dot{\beta}_2$, $\dot{\beta}_2$), die für die Abweichungs-Pitch-Regelung ausgegeben werden sollen, durch Parksches inverses Transformieren der Pitch-Winkel ($\beta_1{}^{cm}$, $\beta_2{}^{cm}$), die an der d-Achse und der q-Achse ausgegeben werden sollen;

4) Erhalten von Pitch-Winkeln ($\beta_1$, $\beta_2$, $\beta_3$), die für die individuelle Pitch-Regelung ausgegeben werden sollen, gemäß dem kollektiven Pitch-Winkel ($\beta_c$), der für die kollektive Pitch-Regelung ausgegeben werden soll, und der Abweichungs-Pitch-Winkel ($\beta'_1$, $\beta'_2$, $\beta'_2$), die für die Abweichung-Pitch-Regelung ausgegeben werden sollen: $\beta_1 = \beta'_1 + \beta_c$, $\beta_2 = \beta'_2 + \beta_c$, $\beta_3 = \beta'_3 + \beta_c$; und

5) Implementieren der Pitch-Regelung durch Regeln von Betrieben von jeweiligen Pitch-Regelungs-Servomotoren gemäß den Pitch-Winkeln ($\beta_1$, $\beta_2$, $\beta_3$), die ausgegeben werden sollen,

**dadurch gekennzeichnet, dass**

vor dem Schritt des Erhaltens einer Drehzahlabweichung $\Delta\omega$ durch Subtrahieren einer Referenzdrehzahl $\omega$ref von der Generatordrehzahl $\omega$g das Verfahren weiterhin einen Schritt des Filterns der Generatordrehzahl ($\omega_g$) gemäß der folgenden Laplace-Formel umfasst:

$$\frac{\omega_{gf}(s)}{\omega_g(s)} = \frac{\omega_1^2}{s^2 + 2\eta_1\omega_1 + \omega_1^2} \cdot \frac{1 + 2\eta_2 s / \omega_2 + s^2 / \omega_2^2}{1 + 2\eta_3 s / \omega_3 + s^2 / \omega_3^2};$$

wobei $\omega_{gf}$ eine Generatordrehzahl nach Filtern ist, $\omega_1$ eine Eigenfrequenz eines Tiefpassfilters ist, $\eta_1$ ein Dämpfungsverhältnis des Tiefpassfilters ist, $\omega_2$ und $\omega_3$ Eigenfrequenzen eines Kerbfilters sind und $\eta_2$ und $\eta_3$ Dämpfungsverhältnisse des Kerbfilters sind.

2. Individuelles Pitch-Regelungsverfahren für die große Windenergieanlage nach Anspruch 1, wobei vor dem Durchführen einer Park-Transformation an den Lastwerten ($M_{y1}$, $M_{y2}$, $M_{y3}$) am Fußteil der drei Schaufeln das Verfahren weiterhin einen Schritt des Durchführens von Tiefpassfiltern gemäß der folgenden Laplace-Formel umfasst:

$$\frac{M_{yif}(s)}{M_{yi}(s)} = \frac{\omega_4^2}{s^2 + 2\eta_4\omega_4 s + \omega_4^2};$$

wobei $i = 1,2,3$, $M_{yi}$ und $M_{yif}$ jeweils Lastwert vor dem Filtern und Lastwert nach dem Filtern an dem Fußteil der $i$ten Schaufel sind, $\omega_4$ eine Eigenfrequenz eines Tiefpassfilters ist und $\eta_4$ ein Dämpfungsverhältnis eines Tiefpassfilters ist.

3. Individuelles Pitch-Regelungsverfahren für die große Windenergieanlage nach Anspruch 1 oder 2, wobei das Verfahren weiterhin einen Schritt des Kerbfilterns der Nicklastkomponente ($M_{tilt}$) und der Gierlastkomponente ($M_{yaw}$) gemäß den folgenden Laplace-Formeln umfasst:

$$\frac{M_{tiltf}(s)}{M_{tilt}(s)} = \frac{1 + 2\eta_5 s / \omega_5 + s^2 / \omega_5^2}{1 + 2\eta_6 s / \omega_6 + s^2 / \omega_6^2}, \qquad \text{und} \qquad \frac{M_{yawf}(s)}{M_{yaw}(s)} = \frac{1 + 2\eta_5 s / \omega_5 + s^2 / \omega_5^2}{1 + 2\eta_6 s / \omega_6 + s^2 / \omega_6^2};$$

wobei $M_{tiltf}$ eine Kipplastkomponente nach dem Filtern ist, $M_{yawf}$ eine Gierlastkomponente nach dem Filtern ist, $\omega_5$ und $\omega_6$ Eigenfrequenzen eines Kerbfilters sind und $\eta_5$ und $\eta_6$ Dämpfungsverhältnisse des Kerbfilters sind.

4. Individuelles Pitch-Regelungsverfahren für die große Windenergieanlage nach Anspruch 1 oder 2, wobei die Park-Transformation eine 3/2-Park-Transformation ist.

**Revendications**

1. Procédé de commande de pas individuelle pour un système de générateur d'éolienne de grandes dimensions, comprenant la décomposition d'une commande de pas individuelle en un processus de commande de pas collective et un processus de commande de pas d'écart, dans lequel le processus de commande de pas collective comprend la commande d'une vitesse de rotation d'un rotor sur la base d'une régulation PI classique par la détection d'une vitesse de rotation de générateur ($\omega_g$), l'obtention d'un écart de vitesse de rotation ($\Delta\omega$) en soustrayant une vitesse de rotation de référence ($\omega_{ref}$) de la vitesse de rotation de générateur ($\omega_g$), et l'obtention de l'angle de calage collectif ($\beta_c$) que l'on souhaite générer pour la commande de pas collective selon la formule de Laplace suivante :

$$\frac{\beta_{c\,(s)}}{\Delta_{\omega(s)}} = \frac{K_c}{sT_c}\,(1 + sT_c),$$

Où $K_c$ est un coefficient de proportionnalité d'un régulateur PI, et
$T_c$ est une constante de temps d'intégration du régulateur PI, dans lequel

le procédé de commande de pas individuelle comprend en outre un processus de commande de pas d'écart, le processus de commande de pas d'écart comprenant :

1) la transmission de valeurs de charge mesurées ($M_{y1}$, $M_{y2}$, $M_{y3}$) au niveau de la partie d'emplanture des trois pales et d'un azimut $\Psi$ du rotor à un régulateur principal, l'exécution d'une transformation de Park sur les valeurs de charge ($M_{y1}$, $M_{y2}$, $M_{y3}$) au niveau de la partie d'emplanture des trois pales par le régulateur principal, et l'obtention de la composante de charge de basculement $M_{tilt}$ et la composante de charge de lacet ($M_{yaw}$) ;
2) l'obtention d'angles de calage ($\beta_1{}^{cm}$, $\beta_1{}^{cm}$) que l'on souhaite générer respectivement sur l'axe d et l'axe q selon les formules de Laplace suivantes :

$$\frac{\beta_1{}^{cm}{}_{(s)}}{M_{tilt}\,(s)} = \frac{K_d}{sT_d}\,(1 + sT_d),\ \frac{\beta_2{}^{cm}{}_{(s)}}{M_{yaw}\,(s)} = \frac{K_q}{sT_q}\,(1 + sT_a),$$

où $K_d$ et $K_q$ sont des coefficients de proportionnalité d'un régulateur PI, et
$T_d$ et $T_q$ sont des constantes de temps d'intégration du régulateur PI, dans lequel

l'axe d et l'axe q sont des axes d'un système de coordonnées fixe d'un moyeu ;
3) l'obtention d'angles de calage d'écart ($\beta'_1$, $\beta'_2$, $\beta'_2$) que l'on souhaite générer pour la commande de pas d'écart au moyen d'une transformation inverse de Park des angles de calage ($\beta_1 c^m$, $\beta_2{}^{cm}$) que l'on souhaite générer sur l'axe d et l'axe q ;
4) l'obtention d'angles de calage ($\beta_1$, $\beta_2$, $\beta_3$) que l'on souhaite générer pour la commande de pas individuelle selon l'angle de calage collectif ($\beta_c$) que l'on souhaite générer pour la commande de pas collective et les angles de calage d'écart ($\beta'_1$, $\beta'_2$, $\beta'_2$) que l'on souhaite générer pour la commande de pas d'écart :

$$\beta_1 = \beta'_1 + \beta_c,\ \beta_2 = \beta'_2 + \beta_c,\ \beta_3 = \beta'_3 + \beta_c\,;$$

et
5) la mise en oeuvre de la commande de pas en commandant le fonctionnement de servomoteurs de commande de pas respectifs selon les angles de calage ($\beta_1$, $\beta_2$, $\beta_3$) que l'on souhaite générer,

**caractérisé en ce que**
avant l'étape d'obtention d'un écart de vitesse de rotation $\Delta\omega$ en soustrayant une vitesse de rotation de référence $\omega ref\ de$ la vitesse de rotation de générateur $\omega g$, le procédé comprend en outre une étape de filtrage de la vitesse de rotation de générateur ($\omega_g$) selon la formule de Laplace suivante :

$$\frac{\omega_{gf}(s)}{\omega_g(s)} = \frac{\omega_1^2}{s^2 + 2\eta_1\omega_1 + \omega_1^2} \cdot \frac{1 + 2\eta_2 s/\omega_2 + s^2/\omega_2^2}{1 + 2\eta_3 s/\omega_3 + s^2/\omega_3^2}\,;$$

où $\omega_{gf}$ est une vitesse de rotation de générateur après filtrage, $\omega_1$ est une fréquence propre d'un filtre passe-bas, $\eta_1$ est un facteur d'amortissement du filtre passe-bas, $\omega_2$ et $\omega_3$ sont des fréquences propres d'un filtre coupe-bande, et $\eta_2$ et $\eta_3$ sont des facteurs d'amortissement du filtre coupe-bande.

2. Procédé de commande de pas individuelle pour le système de générateur d'éolienne de grandes dimensions selon la revendication 1, dans lequel

avant d'exécuter une transformation de Park sur les valeurs de charge ($M_{y1}$, $M_{y2}$, $M_{y3}$) au niveau de la partie d'emplanture des trois pales, le procédé comprend en outre une étape d'exécution d'un filtrage passe-bas selon la formule de Laplace suivante :

$$\frac{M_{yif}(s)}{M_{vi}(s)} = \frac{\omega_4^2}{s^2 + 2\eta_4\omega_4 s + \omega_4^2} \; ;$$

où $i = 1,2,3$, $M_{yi}$ et $M_{yif}$ sont respectivement la valeur de charge avant filtrage et la valeur de charge après filtrage au niveau de la partie d'emplanture de la $i$-ème pale, $\omega_4$ est une fréquence propre d'un filtre passe-bas, et $\eta_4$ est un facteur d'amortissement d'un filtre passe-bas.

3. Procédé de commande de pas individuelle pour le système de générateur d'éolienne de grandes dimensions selon la revendication 1 ou 2, dans lequel

le procédé comprend en outre une étape de filtrage par filtre coupe-bande de la composante de charge de basculement ($M_{tilt}$) et de la composante de charge de lacet ($M_{yaw}$) selon les formules de Laplace suivantes :

$$\frac{M_{tiltf}(s)}{M_{tilt}(s)} = \frac{1 + 2\eta_5 s/\omega_5 + s^2/\omega_5^2}{1 + 2\eta_6 s/\omega_6 + s^2/\omega_6^2} \; ,$$

et

$$\frac{M_{yawf}(s)}{M_{yaw}(s)} = \frac{1 + 2\eta_5 s/\omega_5 + s^2/\omega_5^2}{1 + 2\eta_6 s/\omega_6 + s^2/\omega_6^2} \; ;$$

où $M_{tiltf}$ est une composante de charge d'inclinaison après filtrage, $M_{yawf}$ est une composante de charge de lacet après filtrage, $\omega_5$ et $\omega_6$ sont des fréquences propres d'un filtre coupe-bande, et $\eta_5$ et $\eta_6$ sont des facteurs d'amortissement du filtre coupe-bande.

4. Procédé de commande de pas individuelle pour le système de générateur d'éolienne de grandes dimensions selon la revendication 1 ou 2, dans lequel la transformation de Park est une transformation de Park 3/2.

**Figure 1**

**Figure 2(a)**

**Figure 2(b)**

**Figure 3(a)**

**Figure 3(b)**

**Figure 4**

Azimuth ψ of blade wheel

$M_y$ (Blade1)  $\left(\dfrac{\omega_4^2}{s^2 + 2\eta_4\omega_4 s + \omega_4^2}\right)$

$M_y$ (Blade2)  $\left(\dfrac{\omega_4^2}{s^2 + 2\eta_4\omega_4 s + \omega_4^2}\right)$

$M_y$ (Blade3)  $\left(\dfrac{\omega_4^2}{s^2 + 2\eta_4\omega_4 s + \omega_4^2}\right)$

Low-pass filter

$\dfrac{2}{3}\begin{vmatrix} \cos\psi & \cos(\psi - \dfrac{2\pi}{3}) & \cos(\psi + \dfrac{4\pi}{3}) \\ \sin\psi & \sin(\psi - \dfrac{2\pi}{3}) & \sin(\psi + \dfrac{4\pi}{3}) \end{vmatrix}$

Park transformation

$M_{nit}$

$M_{vm}$

$\begin{vmatrix} \cos\psi & \sin\psi \\ \cos(\psi - \dfrac{2\pi}{3}) & \sin(\psi + \dfrac{2\pi}{3}) \\ \cos(\psi - \dfrac{4\pi}{3}) & \sin(\psi + \dfrac{4\pi}{3}) \end{vmatrix}$

Park inverse transformation

$\beta_1^{cm}$  $\beta_2^{cm}$

$\beta_1'$  $\beta_2'$  $\beta_3'$

$\left(\dfrac{1 - 2\eta_5 s / \omega_5 + s^2 / \omega_5^2}{1 + 2\eta_6 s / \omega_6 + s^2 / \omega_6^2}\right)$

Notch filter

$\dfrac{K_d}{sT_d}(1 + sT_d)$

Gain table

Amplitude-limiting table

$\left(\dfrac{1 + 2\eta_5 s / \omega_5 + s^2 / \omega_5^2}{1 + 2\eta_6 s / \omega_6 + s^2 / \omega_6^2}\right)$

Notch filter

$\dfrac{K_q}{sT_q}(1 + sT_q)$

Gain table

Amplitude-limiting table

PI controller

**Figure 5**

**EP 2 447 527 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200910100064

**Non-patent literature cited in the description**

- Individual Blade Pitch Control for Load Reduction. **E.A. BOSSANYI.** WIND ENERGY. WILEY, 08 October 2002, vol. 6, 119-128